# EUROPÄISCHE PATENTSCHRIFT

(11) **EP 3 656 015 B1**
(45) Veröffentlichungstag und Bekanntmachung des Hinweises auf die Patenterteilung: **02.06.2021**
(21) Anmeldenummer: 18755403.5
(22) Anmeldetag: 10.07.2018
(51) Int. Cl.: H01M 10/663, H01M 10/6566

(54) **ANLAGE ZUR TEMPERIERUNG EINES ELEKTRISCHEN ENERGIESPEICHERS**
ASSEMBLY FOR COOLING AN ELECTRICAL ENERGY STORAGE DEVICE
ASSEMBLAGE POUR LE REFROIDISSEMENT D'UN DISPOSITIF DE STOCKAGE D'ÉNERGIE ÉLÉCTRIQUE

(30) Priorität: 21.07.2017 DE 102017212586
(43) Veröffentlichungstag der Anmeldung: 27.05.2020
(73) Patentinhaber: Mahle International GmbH, 70376 Stuttgart (DE)
(72) Erfinder: HIPP, Christoph, 70192 Stuttgart (DE); SCHAUER, Markus, 71672 Marbach (DE); ZIMMERMANN, Raphael, 70329 Stuttgart (DE)
(74) Vertreter: BRP Renaud & Partner mbB Rechtsanwälte Patentanwälte Steuerberater
(86) Internationale Anmeldenummer: PCT/EP2018/068601
(87) Internationale Veröffentlichungsnummer: WO 2019/016021

(56) Entgegenhaltungen:
- WO-A1-2016/133360
- DE-A1-102009 058 808
- DE-A1-102016 108 468
- US-A1- 2015 096 816

## Beschreibung

Die Erfindung betrifft eine Anlage zur Temperierung eines elektrischen Energiespeichers mit einem Kühlmittelkreislauf, gemäß dem Oberbegriff des Anspruchs 1. Die Erfindung betrifft außerdem ein mit einer derartigen Anlage ausgestattetes Kraftfahrzeug.

Solche Anlagen zur Temperierung eines elektrischen Energiespeichers können beispielsweise zusätzlich einen Kältemittelkreislauf aufweisen, in welchem ein Kältemittel strömt und somit einen Teil einer Wärmepumpe bildet. Dadurch kann das Kühlmittel zusätzlich abgekühlt werden. Die Anlagen weisen daher einen ersten Kühlmittelkühler, der Wärme zwischen dem Kühlmittel und dem Kältemittel übertragen kann, und einen zweiten Kühlmittelkühler auf, der Wärme zwischen dem Kühlmittel und Umgebungsluft übertragen kann. Alternativ kann sich der zweite Kühlmittelkühler außerhalb der Anlage befinden und damit nicht Bestandteil der Anlage sein. In diesem Fall ist der zweite Kühlmittelkühler beispielsweise Bestandteil des fahrzeugseitigen Kühlsystems. Um eine bedarfsgerechte Steuerung der Kühlung des Kühlmittels und damit des Energiespeichers zu ermöglichen kann eine Kühlmittelsteuereinrichtung vorgesehen, mit der eine Durchströmung des ersten Kühlmittelkühlers und des zweiten Kühlmittelkühlers mit Kühlmittel steuerbar oder regelbar ist. Die Kühlmittelsteuereinrichtung kann beispielsweise in der Anlage oder im Kraftfahrzeug angeordnet sein.

Aus der DE 10 2016 108 468 A1 ist beispielsweise ein Fahrzeugklimasystem bekannt, welches auch zur Kühlung eines elektrischen Energiespeichers verwendet wird. Dabei werden mehreren Kühlmodi für das Management der Hochspannungsbatterie beschrieben.

Aus der WO 2016/133360 A1 ist eine Anlage zur Temperierung eines elektrischen Energiespeichers bekannt, mit einem Kühlmittelkreislauf, in welchem ein Kühlmittel strömt, und der thermisch mit dem elektrischen Energiespeicher gekoppelt ist, so dass das Kühlmittel Wärme aus dem elektrischen Energiespeicher aufnehmen oder an den elektrischen Energiespeicher abgeben kann.

Aus der US 2015/0096816 A1 ist eine Fahrzeugklimatisierungsanlage bekannt.

Wenn beispielsweise eine solche Anlage zur Temperierung des elektrischen Energiespeichers auf einem Fahrzeugdach angeordnet werden soll, wie es beispielsweise bei Bussen oder Lkws üblich ist, ist eine Gewichtsreduktion besonders günstig für den Schwerpunkt und somit für das Fahrverhalten des Kraftfahrzeugs. Eine Gewichtsreduktion erhöht auch die Nutzlast des Kraftfahrzeugs.

Der vorliegenden Erfindung liegt daher die Aufgabe zugrunde, eine verbesserte oder zumindest andere Ausführungsform einer Anlage zur Temperierung eines elektrischen Energiespeichers bereitzustellen, die sich insbesondere durch ein geringeres Gewicht auszeichnet.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Die Erfindung basiert auf der Grundidee, die Anlage mit einer Tragstruktur auszustatten und mindestens ein von der Tragstruktur separat ausgebildetes Formbauteil vorzusehen, das aus einem geschäumten Kunststoff gebildet ist. Das so gebildete Formbauteil kann beispielsweise einen Strömungspfad definieren und/oder eine Halterung für ein Element der Anlage bilden. Durch die Verwendung von geschäumtem Kunststoff können leichte und dennoch präzise Halterungen für einzelne Bauteile der Anlage gebildet werden. Des Weiteren ist auf diese Weise auch einfach möglich leichte Luftführungen zu bilden.

Eine günstige Möglichkeit sieht vor, dass der geschäumte Kunststoff expandiertes Polypropylen ist (EPP). Dieser Werkstoff ist günstig herzustellen und weist ausgezeichnete Eigenschaften, insbesondere in Bezug auf ein geringes Gewicht und eine gute Formbarkeit auf.

Erfindungsgemäß ist vorgesehen, dass ein solches Element der Anlage für das ein solches Formbauteil eine Halterung bildet, eine Kühlmittelsteuereinrichtung, und/oder der erste Kühlmittelkühler, und/oder ein Kältemittelkompressor, und/oder eine Kühlmittelpumpe ist. Des Weiteren kann ein solches Formbauteil einen Rahmen für den Kältemittelkondensator bildet.

Eine weitere günstige Möglichkeit sieht vor, dass ein solches Formbauteil eine Aufnahme für die Kühlmittelsteuereinrichtung aufweist, welche eine Kontur aufweist, die komplementär zu einer Kontur der Kühlmittelsteuereinrichtung ist. Dadurch ist die Kühlmittelsteuereinrichtung formschlüssig in dem Formbauteil in ihrer Lage fixiert. Dadurch werden keine oder zumindest weniger spezielle Befestigungsmittel an der Kühlmittelsteuereinrichtung benötigt. Die Kühlmittelsteuereinrichtung kann beispielsweise ein oder mehrere Ventile aufweisen, welche den Kühlmittelfluss beeinflussen können.

Eine weitere besonders günstige Möglichkeit sieht vor, dass die Aufnahme für die Kühlmittelsteuereinrichtung, die Kühlmittelsteuereinrichtung thermisch isoliert. Durch die Verwendung von geschäumtem Kunststoff ist eine solche thermische Isolierung gegeben. Gegebenenfalls muss noch eine zusätzliche Abdeckung vorgesehen sein, so dass die Kühlmittelsteuereinrichtung vollständig von isolierendem Material umschlossen ist. Durch diese Isolierung kann die Bildung von Kondenswasser verhindert werden.

Eine vorteilhafte Lösung sieht vor, dass die Kühlmittelsteuereinrichtung und die Aufnahme für die Kühlmittelsteuereinrichtung derart geformt sind, dass die Kühlmittelsteuereinrichtung nur in einer vorgesehenen Lage in die Halterung eingesetzt werden kann. Dadurch können Fehlmontagen verhindert werden. Beispielsweise können Verwechslungen und somit fehlerhaftes Anschließen von Einlass und Auslass der Kühlmittelsteuereinrichtung verhindert werden.

Eine weitere vorteilhafte Lösung sieht vor, dass ein solches Formbauteil eine Aufnahme für den ersten Kühlmittelkühler aufweist, welche eine Kontur aufweist, die komplementär zu einer Kontur des ersten Kühlmittelkühlers ist. Dadurch ist eine formschlüssige Halterung des ersten Kühlmittelkühlers gegeben, so dass dieser ohne zusätzliche oder zumindest durch weniger zusätzliche Befestigungsmittel in der Anlage gehalten werden kann. Darüber hinaus bewirkt die Aufnahme in dem Formbauteil zumindest teilweise eine thermische Isolierung des ersten Kühlmittelkühlers. Zusätzlich kann auch noch eine weitere Abdeckung vorgesehen sein, so dass der ersten Kühlmittelkühler nahezu vollständig von thermisch isolierendem Material umgeben ist. Dadurch kann zusätzlich die Kondenswasserbildung an dem ersten Kühlmittelkühler verhindert oder zumindest reduziert werden.

Eine weitere besonders vorteilhafte Lösung sieht vor, dass der erste Kühlmittelkühler und die Aufnahme für den ersten Kühlmittelkühler derart geformt sind, dass der erste Kühlmittelkühler nur in einer vorgesehenen Lage in die Halterung eingesetzt werden kann. Durch diese Sicherung der Einbaulage kann die Gefahr von falschen Anschlüssen verhindert oder zumindest verringert werden.

Eine günstige Variante sieht vor, dass die Tragstruktur zur Befestigung der Anlage an einem Montageort ausgebildet ist, insbesondere wird die Tragstruktur dazu verwendet, die Anlage an einem Fahrzeugdach zu halten. Das heißt die Tragstruktur ist dazu ausgebildet, das gesamte Gewicht der Anlage zu halten. Darüber hinaus sind unmittelbar oder mittelbar die meisten, vorzugsweise alle wesentlichen, Elemente der Anlage über die Tragstruktur bzw. an der Tragstruktur gehalten.

Eine weitere günstige Variante sieht vor, dass die Tragstruktur einen Rahmen aufweist. Solche rahmenförmigen Tragstrukturen weisen einen einfachen und stabilen Aufbau auf.

Eine weitere besonders günstige Variante sieht vor, dass die Tragstruktur Metallblech, vorzugsweise Aluminiumblech aufweist. Metallblech hat bezogen auf das Volumen eine hohe Stabilität, so dass die Tragstruktur beispielsweise der Rahmen der Tragstruktur kostengünstig hergestellt werden kann.

Eine weitere zweckmäßige Möglichkeit sieht vor, dass die Anlage einen zweiten Kühlmittelkühler aufweist, der Wärme zwischen dem Kühlmittel und Umgebungsluft übertragen kann, dass die Anlage eine Kühlmittelsteuereinrichtung aufweist, mit der eine Durchströmung des ersten Kühlmittelkühlers und des zweiten Kühlmittelkühlers mit Kühlmittel steuerbar und/oder regelbar ist. Dadurch ist eine bedarfsgerechte Steuerung der Kühlung des Kühlmittels und damit des Energiespeichers möglich.

Eine vorteilhafte Möglichkeit sieht vor, dass die Kühlmittelsteuereinrichtung ein Umschaltventil aufweist, mit welchem der Kühlmittelkreislauf zwischen dem ersten Kühlmittelkühler und dem zweiten Kühlmittelkühler umschaltbar ist. Dadurch kann je nach Kühlbedarf für das Kühlmittel zwischen dem effizienteren Betrieb, in welchem auf die Kühlung durch das Kältemittel verzichtet wird und dem effektiven Weg, bei welchem das Kühlmittel zusätzlich durch das Kältemittel gekühlt wird, hin und her geschaltet werden. Somit kann zu Zeiten, in denen eine geringe Kühlleistung notwendig ist, die Kühlung über den zweiten Kühlmittelkühler, welcher die Wärme an die Luft abgibt, erzielt werden. Falls eine höhere Kühlleistung erforderlich ist bzw. aufgrund von hohen Außentemperaturen die Kühlung über die Luft nicht möglich ist, kann der erste Kühlmittelkühler verwendet werden, der durch die Wärmepumpe im Kältemittelkreislauf das Kühlmittel auf Temperaturen abkühlen kann, die unterhalb der Umgebungstemperatur liegen.

Es versteht sich, dass die Kühlmittelsteuereinrichtung statt einem Umschaltventil auch mehrere Ventile aufweisen kann, die die Durchströmung des ersten Kühlmittelkühlers und des zweiten Kühlmittelkühlers unabhängig voneinander steuern können, so dass das Kühlmittel auch durchaus sowohl durch den ersten Kühlmittelkühler und gleichzeitig durch den zweiten Kühlmittelkühler strömen kann.

Eine weitere vorteilhafte Möglichkeit sieht vor, dass der zweite Kühlmittelkühler als Flachrohrwärmetauscher ausgebildet ist. Solche Flachrohrwärmetauscher haben sich für Wärmetauscher, bei welchen Wärme von einer Flüssigkeit auf Umgebungsluft übertragen werden soll, bewährt.

Eine weitere besonders vorteilhafte Möglichkeit sieht vor, dass der erste Kühlmittelkühler als Stapelscheibenwärmetauscher ausgebildet ist. Solche Stapelscheibenwärmetauscher haben sich für Wärmetauscher bewährt, die Wärme zwischen zwei Flüssigkeiten übertragen sollen.

Eine günstige Lösung sieht vor, dass der Kältemittelkreislauf einen Kältemittelkondensator aufweist, der vorzugsweise als Flachrohrwärmetauscher ausgebildet ist, dass der Kältemittelkondensator und der zweite Kühlmittelkühler nebeneinander angeordnet sind und das vorzugsweise ein Lüfter vorgesehen ist, welcher Luft antreibt, wobei die durch den Lüfter angetriebene Luft durch den Kältemittelkondensator und durch den zweiten Kühlmittelkühler strömt. Durch diese Anordnung kann ein und derselbe Lüfter verwendet werden, um sowohl den Kältemittelkondensator als auch den zweiten Kühlmittelkühler mit Frischluft zu versorgen und somit zu kühlen. Dadurch kann eine besonders kompakte Bauweise erzielt werden.

Eine weitere günstige Lösung sieht vor, dass der Kältemittelkreislauf einen Kältemittelkompressor zum Antreiben des Kältemittels aufweist. Dadurch kann eine Wärmepumpe erzielt werden, so dass eine Kühlung des Kühlmittels auf eine Temperatur möglich ist, die unterhalb der Außentemperatur liegt.

Eine vorteilhafte Variante sieht vor, dass ein solches Formbauteil einen Rahmen für den Kältemittelkondensator bildet. Dadurch kann der Kältemittelkondensator besonders günstig durch das Formbauteil gehalten werden. Zusätzlich kann dieses Formbauteil dabei auch einen Teil der Luftführung bilden.

Eine weitere vorteilhafte Variante sieht vor, dass ein solches Formbauteil eine Haube zur Luftführung bildet, an welcher der Lüfter gehalten ist. Auf diese Weise kann sowohl eine Halterung für den Lüfter als auch eine Luftführung erreicht werden. Somit kann die durch den Lüfter angetriebene Luft gezielt durch den Kältemittelkondensator und den zweiten Kühlmittelkühler geführt werden. Es versteht sich, dass der Lüfter sowohl im Saugbetrieb als auch im Blasbetrieb verwendet werden kann. Das heißt für die Wirkung zur Kühlung des Kältemittelkondensators oder des zweiten Kühlmittelkühlers ist es egal, ob die Luft zunächst durch den Lüfter und dann durch das zu kühlenden Element strömt oder andersrum. Eine zweckmäßige Lösung sieht eine Heizeinrichtung vor, mit welcher das Kühlmittel erwärmt werden kann, so dass der elektrische Energiespeicher beheizt werden kann. Somit kann bei niedrigen Außentemperaturen der elektrische Energiespeicher schneller in einen für den Betrieb optimalen Temperaturbereich gebracht werden.

Eine zweckmäßige Lösung sieht vor, dass das Kühlmittel eine Flüssigkeit ist. Vorzugsweise weist das Kühlmittel Wasser und ein Frostschutzmittel auf. Durch die Verwendung eines flüssigen Kühlmittels kann ein sehr hoher Wärmetransport erreicht werden. Entsprechend sind der erste Kühlmittelkühler und der zweite Kühlmittelkühler für ein flüssiges Kühlmittel ausgelegt.

In der Beschreibung und den beigefügten Ansprüchen ist ein Mittel (Stoff oder Stoffgemisch) dann als flüssig oder als Flüssigkeit anzusehen, wenn das Mittel bei den zu erwartenden Betriebstemperaturen des Mittels flüssig ist.

Ferner beruht die Erfindung auf der Grundidee ein Kraftfahrzeug das eine Antriebsbatterie aufweist, mit einer Anlage zur Temperierung eines elektrischen Energiespeichers gemäß der vorstehenden Beschreibung auszustatten, wobei die Anlage dazu verwendet wird, die Antriebsbatterie des Kraftfahrzeugs zu temperieren. Dadurch übertragen sich die Vorteile der Anlage zur Temperierung des elektrischen Energiespeichers auf das Kraftfahrzeug, auf deren vorstehende Beschreibung insoweit Bezug genommen wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine perspektivische Aufsicht auf eine Anlage zur Temperierung eines elektrischen Energiespeichers, wobei Gehäuseteile ausgeblendet sind,
- Fig. 2: eine perspektivische Ansicht auf die Anlage aus Fig. 1, wobei der Blickwinkel gedreht ist,

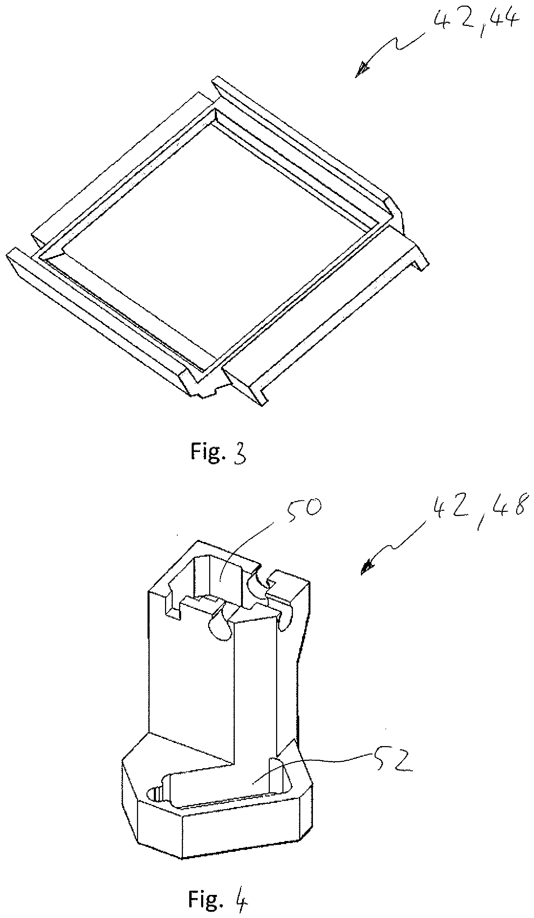

- Fig. 3: eine Draufsicht auf einen Rahmen für einen Kältemittelkondensator und
- Fig. 4: eine perspektivische Ansicht auf ein Formbauteil mit jeweils einer Aufnahme für eine Kühlmittelsteuerungseinrichtung und einen Kühlmittelkühler.

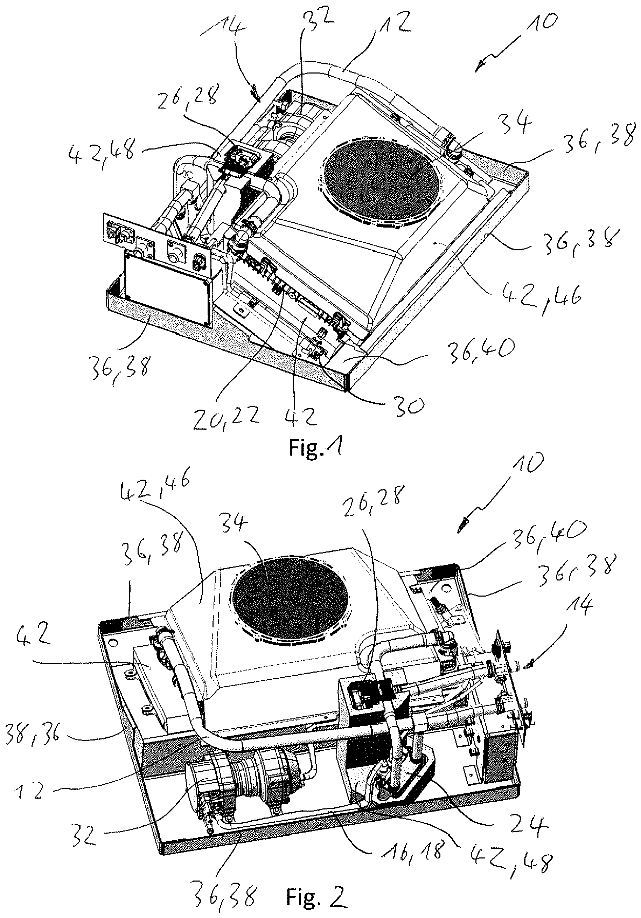

Eine in den Fig. 1 und 2 dargestellte erste Ausführungsform einer Anlage 10 zum Temperieren eines nicht gezeigten elektrischen Energiespeichers weist einen Kühlmittelkreislauf 12 auf, der von einem flüssigem Kühlmittel 14 durchströmt ist, und einen Kältemittelkreislauf 16, der von Kältemittel 18 durchströmt ist. Der Kühlmittelkreislauf 12 ist derart ausgebildet, dass er Wärme von dem elektrischen Energiespeicher aufnehmen und abführen kann. Der Kältemittelkreislauf 16 kann als Wärmepumpe arbeiten und somit eine Temperatursenke bilden, deren Temperatur unterhalb der Umgebungstemperatur liegt.

Das Kühlmittel 14 ist eine Flüssigkeit. Die Wärmetransportfähigkeit von flüssigem Kühlmittel 14 ist höher als die Wärmetransportfähigkeit von Gasförmigem Kühlmittel 14. Beispielsweise weist das Kühlmittel 14 Wasser auf. Zusätzlich kann dem Wasser ein Frostschutzmittel zugefügt sein.

Der Kühlmittelkreislauf 12 weist einen ersten Kühlmittelkühler 24 auf, der vorzugsweise als Stapelscheibenwärmetauscher ausgebildet ist. Der ersten Kühlmittelkühler 24 wird zumindest zeitweise vom Kühlmittel 14 und vom Kältemittel 18 durchströmt. Dazu weist der erste Kühlmittelkühler 24 zwei mediengetrennte und wärmegekoppelte Fluidpfade auf. Somit kann Wärme vom Kühlmittel 14 auf das Kältemittel 18 übertragen werden.

Des Weiteren weist der Kühlmittelkreislauf 12 weist einen zweiten Kühlmittelkühler 20 auf, der vorzugsweise als Flachrohrwärmetauscher 22 ausgebildet ist. Der zweite Kühlmittelkühler 20 kann von Kühlmittel 14 und von Luft durchströmt werden. Der zweite Kühlmittelkühler 20 weist zwei mediengetrennte und wärmegekoppelte Fluidpfade auf, so dass Wärme vom Kühlmittel 14 an die Umgebungsluft abgegeben werden kann.

Somit stehen zur Kühlung des Kühlmittels 14 und somit zur Abfuhr der Wärme aus dem elektrischen Energiespeicher zwei Möglichkeiten zur Verfügung. Zum einen kann mit Hilfe des zweiten Kühlmittelkühlers 20 die Wärme an die Umgebungsluft abgegeben werden. Zum anderen kann durch den ersten Kühlmittelkühler 24 die Wärme an das Kältemittel 18 abgegeben werden, welches, wie im Folgenden gezeigt wird, ebenfalls die Wärme an die Umgebungsluft abgibt. Allerdings kann durch das Kältemittel 18 ein Temperaturniveau erreicht werden, das unterhalb der Außentemperatur/Umgebungstemperatur liegt.

Ergänzend hierzu kann auch eine Heizeinrichtung vorgesehen sein, mit welcher dem Kühlmittel 14 Wärme zugeführt werden kann, sodass der elektrische Energiespeicher beheizt werden kann.

Die Kühlung über den zweiten Kühlmittelkühler 20 weist daher einen besseren Wirkungsgrad auf als die Kühlung über den ersten Kühlmittelkühler 24. Die Kühlung über den ersten Kühlmittelkühler 24 kann niedrigere Temperaturen erreichen als die Kühlung über den zweiten Kühlmittelkühler 20. Daher ist eine Kühlmittelsteuereinrichtung 26 vorgesehen, welche den Kühlmittelfluss durch den ersten Kühlmittelkühler 24 und durch den zweiten Kühlmittelkühler 20 steuert und/oder regelt.

Beispielsweise weist die Kühlmittelsteuereinrichtung 26 mindestens ein Ventil, vorzugsweise ein Umschaltventil 28 auf, mit welchem der Kühlmittelstrom zwischen dem ersten Kühlmittelkühler 24 und dem zweiten Kühlmittelkühler 20 umgeschaltet werden kann. Es versteht sich, dass die Kühlmittelsteuereinrichtung 26 auch zwei separate Ventile aufweisen konnte, die jeweils den Kühlmittelstrom durch den ersten Kühlmittelkühler 24 und durch den zweiten Kühlmittelkühler 20 unabhängig voneinander steuern und/oder regeln kann.

Der Kältemittelkreislauf 16 weist einen Kältemittelkondensator 30 auf, welcher vorzugsweise als Flachrohrwärmetauscher ausgebildet ist. Durch den Kältemittelkondensator 30 kann Wärme vom Kältemittel 18 an die Umgebungsluft abgegeben werden, so dass das Kältemittel in dem Kältemittelkondensator 30 kondensieren kann.

Um das Kältemittel 18 im Kältemittelkreislauf 16 anzutreiben, ist vorzugsweise ein Kältemittelkompressor 32 vorgesehen. Des Weiteren ist vorzugsweise mindestens ein Expansionsventil vorgesehen, durch welches das Kältemittel 18 geleitet wird, bevor es in den ersten Kühlmittelkühler 24 einströmt, so dass die Temperatur des Kältemittels 18 im ersten Kühlmittelkühler 24 reduziert ist, so dass das Kältemittel 18 Wärme vom Kühlmittel 14 aufnehmen kann.

Des Weiteren weist die Anlage 10 einen Lüfter 34 auf, welcher einen Luftstrom erzeugen kann, um Wärme aus dem Kältemittelkondensator 30 und dem zweiten Kühlmittelkühler 20 aufzunehmen. Dazu sind der Kältemittelkondensator 30 und der zweite Kühlmittelkühler 20 vorzugsweise nebeneinander, insbesondere parallel zueinander angeordnet.

Die Anlage 10 weist eine Tragstruktur 36 auf, an welcher die wesentlichen Komponeten der Anlage 10 mittelbar oder unmittelbar gehalten sind. Die Tragstruktur weist einen Rahmen 38 auf, welcher vorzugsweise rechteckig ausgebildet ist. An dem Rahmen ist ein nicht durchgängiger Boden 40 gehalten. Eine Öffnung in dem Boden 40 dient als Luftöffnung, durch welche die Luft für den Lüfter 34 angesaugt oder abgeblasen wird. Des Weiteren weist die Anlage 10 mehrere Gehäusewände 41 auf, welche die Anlage 10 gegenüber der Umwelt abschließen.

Die Anlage 10 weist mindestens ein, beispielsweise drei, Formbauteile auf, die aus einem aufgeschäumten Kunststoff hergestellt sind. Ein solcher aufgeschäumter Kunststoff kann beispielsweise expandiertes Polypropylen (EPP) sein. Diese geschäumten Kunststoffe weisen ein geringes Gewicht und eine gute Formbarkeit auf.

Ein erstes solche Formbauteil 42 ist als Rahmen 44 für den Kältemittelkondensator 30 ausgebildet. In den Rahmen 44 kann der Kältemittelkondensator 30 eingesetzt werden. Vorzugsweise ist der Rahmen 44 derart ausgebildet, dass auch der zweite Kühlmittelkühler 20 an dem Rahmen gehalten sein kann. Dadurch kann der Luftstrom durch den Kältemittelkondensator 30 und durch den zweiten Kühlmittelkühler 20 geleitet werden.

Des Weiteren ist ein solches Formbauteil 42 als Haube 46 für den Lüfter 34 ausgebildet, so dass die von dem Lüfter 34 angesaugte Luft zunächst durch den Kältemittelkondensator 30 und den zweiten Kühlmittelkühler 20 strömt. Eine umgekehrte Strömungsrichtung, bei welcher die Luft vom Lüfter zu dem Kältemittelkondensator 30 und dem zweiten Kühlmittelkühler 20 strömt, ist ebenfalls möglich.

Schließlich ist ein solches Formbauteil 42 als Halter 48 für die Kühlmittelsteuereinrichtung 26 und den ersten Kühlmittelkühler 24 ausgebildet. Der Halter 48 weist jeweils eine Aufnahme 50 für die Kühlmittelsteuerung 26 und eine Aufnahme 52 für den ersten Kühlmittelkühler 24 auf.

Die Aufnahme 50 weist eine Kontur auf, die komplementär zu der Kontur der Kühlmittelsteuereinrichtung 26 ausgebildet ist. Vorzugsweise sind die Aufnahme 50 und die Kühlmittelsteuereinrichtung 26 derart geformt, dass die Kühlmittelsteuereinrichtung 26 nur in einer vorgesehenen Einbauposition in die Aufnahme 50 eingesetzt werden kann. Dadurch wird durch den Halter 48 und die Aufnahme 50 die genaue Einbaulage der Kühlmittelsteuereinrichtung 26 vorgegeben, so dass ein fehlerhaftes Einbauen der Kühlmittelsteuereinrichtung 26 verhindert oder zumindest erschwert wird.

Die Aufnahme 50 umgibt somit zumindest teilweise die Kühlmittelsteuereinrichtung 26, so dass die Aufnahme 50 die Kühlmittelsteuereinrichtung 26 thermisch isoliert. Um die thermische Isolierung zu verbessern kann zusätzlich eine Abdeckung vorgesehen sein, die vorzugsweise ebenfalls aus geschäumtem Kunststoff gebildet ist.

Die Aufnahme 52 für den ersten Kühlmittelkühler 24 weist eine Kontur auf, die komplementär zu der Kontur des ersten Kühlmittelkühlers 24 ausgebildet ist, so dass der erste Kühlmittelkühler 24 formschlüssig in der Aufnahme 52 aufgenommen werden kann. Vorzugsweise sind die Aufnahme 52 und der erste Kühlmittelkühler 24 derart ausgebildet, dass der erste Kühlmittelkühler 24 nur in einer vorgegebenen Einbaulage in die Aufnahme 52 eingesetzt werden kann. Dadurch kann ein falsches Einsetzen des ersten Kühlmittelkühlers 24 verhindert oder zumindest erheblich erschwert werden.

Der Halter 48 kann entweder mehrteilig oder, wie beispielsweise in den Figuren dargestellt ist, einteilig ausgebildet sein, so dass die Aufnahme 50 für die Kühlmittelsteuereinrichtung 26 und die Aufnahme 52 für den ersten Kühlmittelkühler 24 in einem gemeinsamen Formbauteil 42 gehalten sind.

## Patentansprüche

1. Anlage (10) zur Temperierung eines elektrischen Energiespeichers,
- mit einem Kühlmittelkreislauf (12), in welchem ein Kühlmittel (14) strömt, und der thermisch mit dem elektrischen Energiespeicher gekoppelt ist, so dass das Kühlmittel (14) Wärme aus dem elektrischen Energiespeicher aufnehmen oder an den elektrischen Energiespeicher abgeben kann,
- mit einem Kältemittelkreislauf (16), in welchem ein Kältemittel (18) strömt, und der Teil einer Wärmepumpe ist,
- mit einem ersten Kühlmittelkühler (24), der Wärme zwischen dem Kühlmittel (14) und dem Kältemittel (18) übertragen kann,
**dadurch gekennzeichnet,**
- **dass** die Anlage (10) eine Tragstruktur (36) umfasst,
- **dass** die Anlage (10) mindestens ein zu der Tragstruktur (10) separat ausgebildetes Formbauteil (42) umfasst, das geschäumten Kunststoff aufweist, und
- **dass** mindestens ein solches Formbauteil (42) einen Luftströmungspfad definiert und/oder eine Halterung (48) für ein Element der Anlage (10) bildet,
- **dass** ein solches Formbauteil (42) eine Halterung (48) für eine Kühlmittelsteuereinrichtung (26), und/oder eine Halterung (48) für den ersten Kühlmittelkühler (24), und/oder eine Halterung für einen Kältemittelkompressor, und/oder eine Halterung für eine Kühlmittelpumpe bildet und/oder dass ein solches Formbauteil (42) einen Rahmen (44) für den Kältemittelkondensator (30) bildet.

2. Anlage nach Anspruch 1,
**dadurch gekennzeichnet,**
**dass** ein solches Formbauteil (42) eine Aufnahme (50) für die Kühlmittelsteuereinrichtung (26) aufweist, welche eine Kontur aufweist, die komplementär zu einer Kontur der Kühlmittelsteuereinrichtung (26) ist.

3. Anlage nach Anspruch 2,
**dadurch gekennzeichnet,**
**dass** die Kühlmittelsteuereinrichtung (26) und die Aufnahme (50) für die Kühlmittelsteuereinrichtung (26) derart geformt sind, dass die Kühlmittelsteuereinrichtung (26) nur in einer vorgesehenen Lage in die Halterung (48) einsetzbar ist.

4. Anlage nach einem der Ansprüche 1 bis 3,
**dadurch gekennzeichnet,**
**dass** ein solches Formbauteil (42) eine Aufnahme (52) für den ersten Kühlmittelkühler (24) aufweist, welche eine Kontur aufweist, die komplementär zu einer Kontur des ersten Kühlmittelkühlers (24) ist.

5. Anlage nach Anspruch 4,
**dadurch gekennzeichnet,**
**dass** der erste Kühlmittelkühler (24) und die Aufnahme (52) für den ersten Kühlmittelkühler (24) derart geformt sind, dass der erste Kühlmittelkühler (24) nur in einer vorgesehenen Lage in die Halterung (48) einsetzbar ist.

6. Anlage nach einem der Ansprüche 1 bis 5,
**dadurch gekennzeichnet,**
- **dass** die Tragstruktur (36) zur Befestigung der Anlage an einem Montageort ausgebildet ist, und/oder
- **dass** die Tragstruktur (36) einen Rahmen (38) aufweist.

7. Anlage nach einem der Ansprüche 1 bis 6,
**dadurch gekennzeichnet,**
**dass** die Tragstruktur (36) Metallblech, vorzugsweise Aluminiumblech, aufweist.

8. Anlage nach einem der Ansprüche 1 bis 7,
**dadurch gekennzeichnet,**
- **dass** die Anlage (10) einen zweiten Kühlmittelkühler (20) aufweist, der Wärme zwischen dem Kühlmittel (14) und Umgebungsluft übertragen kann,
- **dass** die Anlage (10) eine Kühlmittelsteuereinrichtung (26) aufweist, mit der eine Durchströmung des ersten Kühlmittelkühlers (24) und des zweiten Kühlmittelkühlers (20) mit Kühlmittel (14) steuerbar und/oder regelbar ist.

9. Anlage nach Anspruch 8,
**dadurch gekennzeichnet,**
**dass** die Kühlmittelsteuereinrichtung (26) ein Umschaltventil (28) aufweist, mit welchem der Kühlmittelkreislauf (12) zwischen dem ersten Kühlmittelkühler (24) und dem zweiten Kühlmittelkühler (20) umschaltbar ist.

10. Anlage nach Anspruch 8 oder 9,
**dadurch gekennzeichnet,**
- **dass** der Kältemittelkreislauf (16) einen Kältemittelkondensator (30) aufweist, der vorzugsweise als Flachrohrwärmetauscher (22) ausgebildet ist,
- **dass** der Kältemittelkondensator (30) und der zweite Kühlmittelkühler (20) nebeneinander angeordnet sind, und
- **dass** vorzugsweise ein Lüfter (34) vorgesehen ist, welcher Luft antreibt, wobei die durch den Lüfter (34) angetriebene Luft durch den Kältemittelkondensator (30) und durch den zweiten Kühlmittelkühler (20) strömt.

11. Anlage nach Anspruch 10,
**dadurch gekennzeichnet,**
**dass** ein solches Formbauteil (42) einen Rahmen (44) für den Kältemittelkondensator (30) bildet, und/oder
**dass** ein solches Formbauteil (42) eine Haube (46) zur Luftführung bildet, an welcher der Lüfter (34) gehalten ist.

12. Anlage nach einem der Ansprüche 1 bis 11,
**dadurch gekennzeichnet,**
**dass** das Kühlmittel (14) eine Flüssigkeit ist.

13. Kraftfahrzeug mit einer Antriebsbatterie und mit einer Anlage (10) zur Temperierung eines elektrischen Energiespeichers nach einem der Ansprüche 1 bis 12, wobei die Antriebsbatterie durch die Anlage (10) temperiert ist.

## Claims

1. Apparatus (10) for controlling the temperature of an electrical energy storage device, comprising
- a coolant circuit (12) through which a coolant (14) flows and which is thermally coupled to the electrical energy storage device so that the coolant (14) can absorb heat from the electrical energy storage device or can dissipate heat to the electrical energy storage device,
- a refrigerant circuit (16) in which a refrigerant (18) flows and which is part of a heat pump;
- a first coolant cooler (24) which can transfer heat between the coolant (14) and the refrigerant (18),
**characterised in**
- **that** the apparatus (10) comprises a support structure (36),
- **that** the apparatus (10) comprises at least one moulded component (42) which is formed separately from the support structure (10) and includes foamed plastic, and
- **that** at least one such moulded component (42) defines an air flow path and/or forms a holder (48) for an element of the apparatus (10),
- **that** such a moulded component (42) forms a holder (48) for a coolant control device (26), and/or a holder (48) for the first coolant cooler (24), and/or a holder for a refrigerant compressor, and/or a holder for a coolant pump and/or that such a moulded component (42) forms a frame (44) for the refrigerant condenser (30).

2. Apparatus according to claim 1,
**characterised in**
**that** such a moulded component (42) includes a receptacle (50) for the coolant control device (26), the receptacle having a contour which is complementary to a contour of the coolant control device (26).

3. Apparatus according to claim 2,
**characterised in**
**that** the coolant control device (26) and the receptacle (50) for the coolant control device (26) are shaped in such a way that the coolant control device (26) can only be inserted into the holder (48) in an intended position.

4. Apparatus according to any of claims 1 to 3,
**characterised in**
**that** such a moulded component (42) has a receptacle (52) for the first coolant cooler (24), the receptacle having a contour which is complementary to a contour of the first coolant cooler (24).

5. Apparatus according to claim 4,
**characterised in**
**that** the first coolant cooler (24) and the receptacle (52) for the first coolant cooler (24) are shaped in such a way that the first coolant cooler (24) can only be inserted into the holder (48) in an intended position.

6. Apparatus according to any of claims 1 to 5,
**characterised in**
- **that** the support structure (36) is designed to secure the apparatus at an assembly location, and/or
- the support structure (36) includes a frame (38).

7. Apparatus according to any of claims 1 to 6,
**characterised in**
**that** the support structure (36) includes a metal sheet, preferably an aluminium sheet.

8. Apparatus according to any of claims 1 to 7,
**characterised in**
- **that** the apparatus (10) includes a second coolant cooler (20) which can transfer heat between the coolant (14) and ambient air,
- **that** the apparatus (10) includes a coolant control device (26) which can control and/or regulate a through flow of coolant (14) through the first coolant cooler (24) and the second coolant cooler (20).

9. Apparatus according to claim 8,
**characterised in**
**that** the coolant control device (26) includes a switchover valve (28) by which the coolant circuit (12) can be switched between the first coolant cooler (24) and the second coolant cooler (20).

10. Apparatus according to claim 8 or 9,
**characterised in**
- **that** the refrigerant circuit (16) includes a refrigerant condenser (30) which is preferably designed as a flat-tube heat exchanger (22),
- **that** the refrigerant condenser (30) and the second coolant cooler (20) are arranged adjacent to one another, and
- **that** a fan (34) is preferably provided which drives air, wherein the air driven by the fan (34) flows through the refrigerant condenser (30) and through the second coolant cooler (20).

11. Apparatus according to claim 10,
**characterised in**
**that** a moulded component (42) forms a frame (44) for the refrigerant condenser (30), and/or
**that** such a moulded component (42) forms a cover (46) for guiding air on which the fan (34) is held.

12. Apparatus according to any of claims 1 to 11,
**characterised in**
**that** the coolant (14) is a liquid.

13. Motor vehicle, comprising a drive battery and an apparatus (10) for controlling the temperature of an electrical energy storage device according to any of claims 1 to 12, wherein the temperature of the drive battery is controlled by the apparatus (10).

## Revendications

1. Installation (10) de régulation de température d'un accumulateur d'énergie électrique,
- avec un circuit d'agent de refroidissement (12), dans lequel un agent de refroidissement (14) circule, et qui est couplé thermiquement à l'accumulateur d'énergie électrique, de sorte que l'agent de refroidissement (14) peut absorber une chaleur issue de l'accumulateur d'énergie électrique ou la donner à l'accumulateur d'énergie électrique,
- avec un circuit d'agent frigorigène (16), dans lequel un agent frigorigène (18) circule, et qui fait partie d'une pompe à chaleur,
- avec un premier refroidisseur d'agent de refroidissement (24), qui peut transférer de la chaleur entre l'agent de refroidissement (14) et l'agent frigorigène (18),
**caractérisée en ce que**
- l'installation (10) comprend une structure porteuse (36),
- l'installation (10) comprend au moins un composant moulé (42) réalisé séparément de la structure porteuse (10), qui présente une matière plastique expansée, et
- au moins un tel composant moulé (42) définit un chemin de circulation d'air et/ou forme un support (48) pour un élément de l'installation (10),
- un tel composant moulé (42) forme un support (48) pour un dispositif de commande d'agent de refroidissement (26), et/ou un support (48) pour le premier refroidisseur d'agent de refroidissement (24), et/ou un support pour un compresseur d'agent frigorigène, et/ou un support pour une pompe à agent de refroidissement et/ou en ce qu'un tel composé moulé (42) forme un cadre (44) pour le condensateur d'agent frigorigène (30).

2. Installation selon la revendication 1,
**caractérisée en ce que**
un tel composant moulé (42) présente un logement (50) pour le dispositif de commande d'agent de refroidissement (26), qui présente un contour qui est complémentaire d'un contour du dispositif de commande d'agent de refroidissement (26).

3. Installation selon la revendication 2,
**caractérisée en ce que**
le dispositif de commande d'agent de refroidissement (26) et le logement (50) pour le dispositif de commande d'agent de refroidissement (26) sont façonnés de telle sorte que le dispositif de commande d'agent de refroidissement (26) n'est insérable dans le support (48) que dans une position prévue.

4. Installation selon l'une quelconque des revendications 1 à 3,
**caractérisée en ce que**
un tel composant moulé (42) présente un logement (52) pour le premier refroidisseur d'agent de refroidissement (24), qui présente un contour qui est complémentaire d'un contour du premier refroidisseur d'agent de refroidissement (24).

5. Installation selon la revendication 4,
**caractérisée en ce que**
le premier refroidisseur d'agent de refroidissement (24) et le logement (52) pour le premier refroidisseur d'agent de refroidissement (24) sont façonnés de telle sorte que le premier refroidisseur d'agent de refroidissement (24) n'est insérable dans le support (48) que dans une position prévue.

6. Installation selon l'une quelconque des revendications 1 à 5,
**caractérisée en ce que**
- la structure porteuse (36) est réalisée pour la fixation de l'installation à un lieu de montage, et/ou
- la structure porteuse (36) présente un cadre (38).

7. Installation selon l'une quelconque des revendications 1 à 6,
**caractérisée en ce que**
la structure porteuse (36) présente une tôle métallique, de préférence une tôle en aluminium.

8. Installation selon l'une quelconque des revendications 1 à 7,
**caractérisée en ce que**
- l'installation (10) présente un second refroidisseur d'agent de refroidissement (20) qui peut transférer de la chaleur entre l'agent de refroidissement (14) et l'environnement immédiat,
- l'installation (10) présente un dispositif de commande d'agent de refroidissement (26), avec lequel une circulation du premier refroidisseur d'agent de refroidissement (24) et du second refroidisseur d'agent de refroidissement (20) avec un agent de refroidissement (14) peut être commandée et/ou réglée.

9. Installation selon la revendication 8,
**caractérisée en ce que**
le dispositif de commande d'agent de refroidissement (26) présente une soupape de commutation (28) avec laquelle le circuit d'agent de refroidissement (12) peut commuter entre le premier refroidisseur d'agent de refroidissement (24) et le second refroidisseur d'agent de refroidissement (20).

10. Installation selon la revendication 8 ou 9,
**caractérisée en ce que**
- le circuit d'agent frigorigène (16) présente un condensateur d'agent frigorigène (30), qui est réalisé de préférence en tant qu'échangeur de chaleur à tuyaux plats (22),
- le condensateur d'agent frigorigène (30) et le second refroidisseur d'agent de refroidissement (20) sont disposés côte à côte, et
- de préférence un aérateur (34) est prévu, qui entraîne de l'air, dans laquelle l'air entraîné par le biais de l'aérateur (34) circule à travers le condensateur d'agent frigorigène (30) et à travers le second refroidisseur d'agent de refroidissement (20).

11. Installation selon la revendication 10,
**caractérisée en ce que**
un tel composant moulé (42) forme un cadre (44) pour le condensateur d'agent frigorigène (30), et/ou
un tel composant moulé (42) forme une hotte (46) pour un guidage d'air, au niveau de laquelle l'aérateur (34) est maintenu.

12. Installation selon l'une quelconque des revendications 1 à 11,
**caractérisée en ce que**
l'agent de refroidissement (14) est un liquide.

13. Véhicule automobile avec une batterie d'entraînement et avec une installation (10) pour la régulation de température d'un accumulateur d'énergie électrique selon l'une quelconque des revendications 1 à 12, dans lequel la batterie d'entraînement est régulée en température par le biais de l'installation (10).
